# EUROPÄISCHE PATENTSCHRIFT

(11) **EP 0 815 629 B1**
(45) Veröffentlichungstag und Bekanntmachung des Hinweises auf die Patenterteilung: **16.06.1999**
(21) Anmeldenummer: 96906765.1
(22) Anmeldetag: 13.03.1996
(51) Int. Cl.: H02H 1/04

(54) **FEHLERSTROMSCHUTZSCHALTER ODER DIFFERENZSTROMSCHUTZSCHALTER MIT VERZÖGERTER AUSLÖSUNG**
DELAYED-ACTION FAULT CURRENT OF DIFFERENTIAL CURRENT CIRCUIT-BREAKER
DISJONCTEUR DE COURANT DE FUITE OU DISJONCTEUR DE COURANT DIFFERENTIEL A DECLENCHEMENT TEMPORISE

(30) Priorität: 20.03.1995 EP 95104078
(43) Veröffentlichungstag der Anmeldung: 07.01.1998
(73) Patentinhaber: SIEMENS AKTIENGESELLSCHAFT, 80333 München (DE)
(72) Erfinder: BAUER, Bernhard, D-93053 Regensburg (DE)
(86) Internationale Anmeldenummer: EP9601075
(87) Internationale Veröffentlichungsnummer: WO9629770

(56) Entgegenhaltungen:
- BE-A- 691 362
- FR-A- 2 390 737
- US-A- 3 965 394
- US-A- 4 034 269
- PATENT ABSTRACTS OF JAPAN Bd. 16, Nr. 482 (E-1275) 07 Oktober 1992 & JP,A,04 172 915 (TOSHIBA) 19 Juni 1992

## Beschreibung

Die Erfindung bezieht sich auf einen Fehlerstromschutzschalter oder auf einen Differenzstromschutzschalter mit verzögerter Auslösung, beide nachstehend hier Schutzschalter genannt. Mit einem Summenstromwandler und einem Auslösekreis arbeitet der Schutzschalter auf Schaltkontakte in einem zu schützenden Verbraucherkreis, im einzelnen nach Gattungsbegriff von Patentanspruch 1. Der Auslösekreis ist zwischen Sekundärspule des Summenstromwandlers und Auslösewicklung eines Auslösers mit einer Vollweggleichrichterschaltung mit Mittelpunktanzapfung und einem R-C-Glied zur Bildung einer Ladezeitkonstanten versehen. Derartige Schutzschalter sind auf dem Markt.

Bei Schutzschaltern für einen Nennfehlerstrom von 30 mA und Auslösung bei Wechselfehlerströmen und bei pulsierenden Fehlerströmen ist es zur Erreichung einer verzögerten Auslösung bekannt, vor der Auslösewicklung einer Auslöseeinrichtung ein R-C-Glied vorzusehen, wodurch bei Wechselfehlerströmen sichergestellt werden kann, daß ein mitunter unerwünschtes Auslösen bei Fehlerströmen bis zu 10 Millisekunden Dauer nicht erfolgen kann. Dies kann insbesondere bei niedriger Auslösescheinleistung bei Fehlerströmen als Wechselfehlerströmen zu Schwierigkeiten führen.

Der Erfindung liegt die Aufgabe zugrunde, die bekannte Schaltung so weiterzuentwickeln, daß auch pulsierende Fehlerströme bis zu 10 Millisekunden Stromflußdauer, auch bei höherer Nennstromstärke bzw. bei niedrigerer Primärwindungszahl nicht zu einer Auslösung führen.

Die Lösung der geschilderten Aufgabe erfolgt nach der Erfindung durch einen Schutzschalter nach Patentanspruch 1. Hierbei ist ein weiteres R-C-Glied zum ersten R-C-Glied hinsichtlich dessen Anschaltung an der Sekundärwicklung des Summenstromwandlers parallel geschaltet, im einzelnen nach Kennzeichen von Patentanspruch 1. Das weitere R-C-Glied ist so bemessen, daß die Ladezeitkonstante τ = R · C des weiteren R-C-Gliedes kleiner als die des ersten R-C-Gliedes ist, so daß eine Fehlauslösung bei einem Fehlerstrom kleiner Amplitude in der Größenordnung des 5-fachen Nennfehlerstromes unterbleibt.

Insbesondere kann der Widerstand des ersten R-C-Gliedes der Spannungsbegrenzungsvorrichtung in Reihenschaltung auf zwei Widerstände aufgeteilt sein, im einzelnen nach Anspruch 2. Ein Widerstand im Kreis Sekundärwicklung-Spannungsbegrenzungsvorrichtung ist dabei so bemessen, daß der Stromfluß über die Spannungsbegrenzungsvorrichtung bzw. der Spannungsabfall an dieser so vermindert wird, daß eine Auslösung bei einer Stromflußdauer eines Fehlerstromes großer Amplitude in der Größenordnung des 17.000-fachen Nennfehlerstromes unterbleibt. Durch einen Schutzschalter mit den Merkmalen nach Patentanspruch 1 und 2 unterbleibt eine Auslösung bei Fehlerströmen der Art von Wechselfehlerströmen und/oder pulsierenden Fehlerströmen bei einer Fehlerstromdauer bis zu 10 Millisekunden, wie es für bestimmte Anwendungsfälle erwünscht ist.

Die Spannungsbegrenzungsvorrichtung ist aufgrund der steilen Strom-Spannungs-Diodenkennlinie in Durchlaßrichtung und der damit verminderten Temperaturdrift der Auslösefehlerströme vorteilhaft eine in Durchlaßrichtung geschaltete Zener-Diode. Es ist vorteilhaft, wenn das weitere R-C-Glied mit einem Entladewiderstand in Verbindung steht, so daß dieses weitere R-C-Glied wieder aufnahmebereit ist und sozusagen Störimpulse aufnehmen kann.

Die Erfindung soll nun anhand von in der Zeichnung grob schematisch wiedergegebenen Ausführungsbeispielen näher erläutert werden:

In FIG 1 ist der Auslösekreis eines Schutzschalter wiedergegeben, der bei kleinen Fehlerströmen bis 10 Millisekunden Dauer nicht auslöst.

In FIG 2 ist der Auslösekreis eines Fehlerstromschutzschalters veranschaulicht, der auf dem Markt ist.

In FIG 3 ist der Auslösekreis eines Schutzschalters nach FIG 1 wiedergegeben, der jedoch so abgeändert ist, daß auch bei Fehlerströmen mit sehr großer Amplitude eine Auslösung bei Fehlerströmen bis zu 10 Millisekunden Dauer nicht erfolgt.

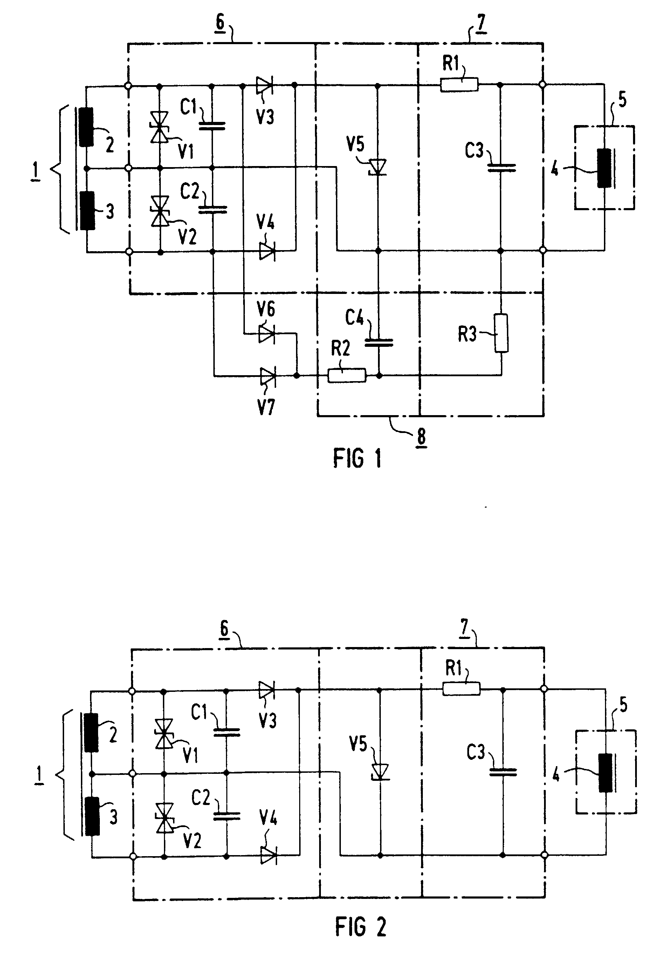

Beim Auslösekreis des Schutzschalters nach FIG 1 arbeitet ein Summenstromwandler 1 mit zwei Sekundärwicklungen 2, 3 und einem Auslösekreis zwischen Sekundärwicklung 2, 3 des Summenstromwandlers 1 und Auslösewicklung 4 einer Auslöseeinrichtung 5 auf nicht wiedergegebene Schaltkontakte in einem zu schützenden Leitungskreis. Dessen Leiter bilden die Primärwicklung des Summenstromwandlers 1 in an sich bekannter Weise. Der Auslösekreis weist eine Vollweggleichrichterschaltung 6 und ein R-C-Glied 7 zur Bildung einer Ladezeitkonstanten R1 x C3 für den Kondensator C3 auf. Das R-C-Glied 7 ist durch eine Spannungsbegrenzungsvorrichtung V5 in der Ausführung als Diode in seiner Ladespannung begrenzt. Ein weiteres R-C-Glied 8 aus dem Widerstand R2 und dem Kondensator C4 ist zum ersten R-C-Glied 7 hinsichtlich dessen Anschaltung an der Sekundärwicklung, den Wicklungen 2 bzw. 3, des Summenstromwandlers 1 parallel geschaltet. Die Vollweggleichrichterschaltung 6 ist mit Mittelpunktanzapfung ausgeführt.

Die Ladezeitkonstante aus R2 x C4 des weiteren R-C-Gliedes 8 ist so bemessen, daß sie kleiner als die des ersten R-C-Gliedes 7 ist. Dadurch wird eine Auslösung bei einer Stromflußdauer eines Fehlerstromes kleiner Amplitude in der Größenordnung des 5-fachen Nennfehlerstromes vermieden. Die Ladezeitkonstante des ersten R-C-Gliedes 7 vor der Auslöseeinrichtung 5 könnte andererseits nicht einfach vergrößert werden, da die gedanklich mögliche Zeitkonstante durch die einzuhaltende Auslösezeit von maximal 40 Millisekunden bei einem 5-fachen Nennfehlerstrom bei pulsierendem Gleichfehlerstrom mit 0° Phasenanschnitt begrenzt wird. Durch das weitere parallel geschaltete R-C-Glied 8 wird das Ziel erreicht. Beim weiteren R-C-Glied 8 ist die Ladezeitkonstante R2 x C4 kleiner als die Ladezeitkonstante R1 x C3 des ersten R-C-Gliedes zu halten. Es ist günstig, die Endladezeitkonstante R3 x C4 mindestens um den Faktor 100 größer zu bemessen als die Endladezeitkonstante aus C3 und dem Widerstand der Auslösewicklung 4 der Auslöseeinrichtung 5.

Das weitere R-C-Glied 8 wird nur bei selten wiederkehrenden und nur kurzzeitigen dynamischen Arbeitsströmen und entsprechend möglichen Fehlerströmen wirksam. Bei länger anstehenden Fehlerströmen größerer Amplitude wird bei entsprechend großer Endladezeitkonstante und schon bei einer einmaligen Aufladung nur eine unwesentliche Verlängerung der Auslösezeit verursacht. Da bei einem Fehlerstrom abwechselnder Polarität die Zeit zwischen den Stromimpulsen einer Polarität bei Impulsen von 10 Millisekunden Dauer gemäß Vorschrift 60 Sekunden beträgt, und zwar bis zum 5-fachen Nennfehlerstrom, wird der Kondensator C4 trotz seiner verhältnismäßig großen Endladezeitkonstanten entladen und steht für eine Aufnahme von Stromimpulsen wieder bereit, so daß eine unerwünschte Auslösung unterbleibt.

In FIG 2 ist der Auslösekreis eines auf dem Markt befindlichen Fehlerstromschutzschalters bei übereinstimmenden Bezugszeichen wiedergegeben.

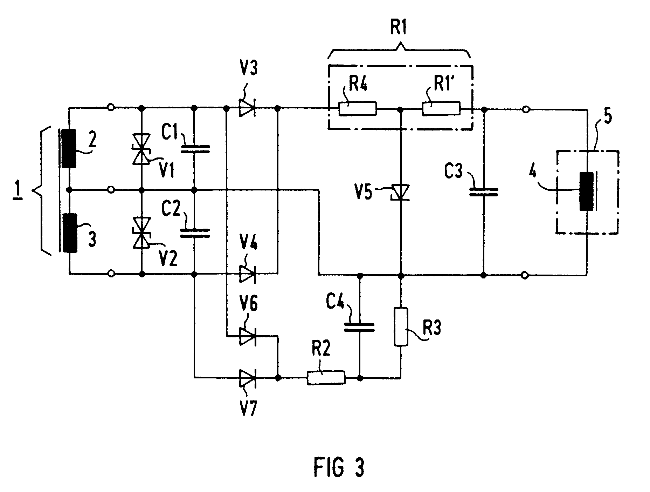

Beim Auslösekreis nach FIG 3 ist hinsichtlich der Ausführung nach FIG 1 der Widerstand R1 des ersten R-C-Gliedes 7 zur Spannungsbegrenzungsvorrichtung V5 auf zwei Widerstände R4 und R1' in Reihenschaltung aufgeteilt. Ein Widerstand R4 im Kreis Sekundärwicklung-Spannungsbegrenzungsvorrichtung ist dabei derart bemessen, daß der Stromfluß über die Strombegrenzungsvorrichtung V5 bzw. der Spannungsabfall an dieser so vermindert wird, daß eine Auslösung bei einer Stromflußdauer eines Fehlerstromes großer Amplitude in der Größenordnung des 17.000-fachen Nennfehlerstromes unterbleibt. Bei Impulsen von 10 Millisekunden Dauer und einer Amplitude der Größenordnung von 500 Ampere unterbleibt bei einem Schutzschalter mit 30 Milliampere Nennfehlerstrom eine Auslösung. Hierbei sprechen Überspannungsschutzdioden V1 und V2 an sowie die Spannungsbegrenzungsvorrichtung V5.

Wenn die Spannungsbegrenzungsvorrichtung V5 eine Diode derart ist, daß die Durchlaßspannung mit zunehmendem Strom ansteigt, wird die Auslöseschwelle bei konstanter Ladezeit an sich schneller erreicht. Durch die Aufteilung des Widerstandes R1 des ersten R-C-Gliedes in R1' und R4 kann der Stromfluß über die Spannungsbegrenzungsvorrichtung V5 dennoch begrenzt werden und der Spannungsfall in Durchlaßrichtung so vermindert werden, daß der Abstand zwischen Stromimpulsen an der Auslösewicklung 4 so vergrößert wird, daß auch bei Fehlerströmen in der Größenordnung von 500 Ampere und einer Dauer von 10 Millisekunden noch sichergestellt ist, daß der Schutzschalter nicht auslöst. Die Ventile V6 und V7 dienen zum Ankoppeln des weiteren R-C-Gliedes 8 in Parallelschaltung zum ersten R-C-Glied 7 an der Sekundärwicklung des Summenstromwandlers 1. Der Widerstand R3 bestimmt die Entladezeit des Kondensators C4.

## Patentansprüche

1. Fehlerstromschutzschalter oder Differenzstromschutzschalter, beide nachstehend Schutzschalter genannt, der mit seinem Summenstromwandler (1) und seinem Auslösekreis auf Schaltkontakte arbeitet, wobei der Auslösekreis zwischen Sekundärwicklung (2, 3) des Summenstromwandlers (1) und Auslösewicklung (4) einer Auslöseeinrichtung (5) eine Vollweggleichrichterschaltung (6) mit Mittelpunktanzapfung und R-C-Glied (7) zur Bildung einer Ladezeitkonstanten (R1 x C3) aufweist, wobei das R-C-Glied (7) durch eine Spannungsbegrenzungsvorrichtung (V5) in seiner Ladespannung begrenzt ist,
**dadurch gekennzeichnet**,
daß ein weiteres R-C-Glied (8) zum ersten R-C-Glied (7) hinsichtlich dessen Anschaltung an der Sekundärwicklung (2, 3) des Summenstromwandlers (1) parallel geschaltet und so bemessen ist, daß die Ladezeitkonstante (R2 x C4) des weiteren R-C-Gliedes (8) kleiner als die des ersten R-C-Gliedes (7) ist, so daß eine Auslösung bei einem Fehlerstrom kleiner Amplitude in der Größenordnung des 5-fachen Nennfehlerstromes unterbleibt.

2. Schutzschalter nach Anspruch 1,
**dadurch gekennzeichnet,**
daß der Widerstand (R1) des ersten R-C-Gliedes (7) zur Spannungsbegrenzungsvorrichtung (V5) auf zwei Widerstände (R4, R1') in Reihenschaltung aufgeteilt ist, wobei ein Widerstand (R4) im Kreis Sekundärwicklung-Spannungsbegrenzungsvorrichtung derart bemessen ist, daß der Stromfluß über die Spannungsbegrenzungsvorrichtung (V5) bzw. der Spannungsfall an dieser so vermindert wird, daß eine Auslösung bei einem Fehlerstrom großer Amplitude in der Größenordnung des 17.000-fachen Nennfehlerstromes unterbleibt.

3. Schutzschalter nach Anspruch 1 oder 2,
**dadurch gekennzeichnet,**
daß als Spannungsbegrenzungsvorrichtung (V5) eine in Durchlaßrichtung geschaltete Zener-Diode dient.

4. Schutzschalter nach Anspruch 1 oder 2,
**dadurch gekennzeichnet**,
daß der Kondensator (C4) des weiteren R-C-Gliedes (8) mit einem Entladewiderstand (R3) in Verbindung steht.

## Claims

1. Residual-current-operated circuit-breaker or residual-current circuit-breaker, both called circuitbreakers in the following, which with its summation current transformer (1) and its tripping circuit works on switching contacts, with the tripping circuit having between the secondary winding (2, 3) of the summation current transformer (1) and the trip winding (4) of a tripping device (5) a full-wave rectifier circuit (6) with centre tap and RC-element (7) for the formation of a charging-time constant (R1 x C3), with the RC-element (7) being limited in terms of its charging voltage by a voltage-limiting device (V5), characterised in that a further RC-element (8) is connected in parallel with the first RC-element (7) with respect to its connection to the secondary winding (2, 3) of the summation current transformer (1) and is dimensioned in such a way that the charging-time constant (R2 x C4) of the further RC-element (8) is smaller than that of the first RC-element (7), so that tripping in the case of a low-amplitude residual current in the order of magnitude of the fivefold nominal residual current does not occur.

2. Circuit-breaker according to claim 1, characterised in that the resistor (R1) of the first RC-element (7) is divided at the voltage-limiting device (V5) into two resistors (R4, R1') in series circuit arrangement, with one resistor (R4) in the circuit secondary winding/voltage-limiting device being dimensioned in such a way that the flow of current over the voltage-limiting device (V5) or the voltage drop at the latter is reduced in such a way that tripping in the case of a high-amplitude residual current in the order of magnitude of the 17,000-fold nominal residual current does not occur.

3. Circuit-breaker according to claim 1 or 2, characterised in that a Zener diode connected in the forward direction is used as a voltage-limiting device (V5).

4. Circuit-breaker according to claim 1 or 2, characterised in that the capacitor (C4) of the further RC-element (8) is connected to a discharge resistor (R3).

## Revendications

1. Disjoncteur de protection en courant de fuite ou disjoncteur de protection en courant différentiel, tous deux appelés ci-dessous disjoncteurs, qui agit par son transformateur sommateur de courant (1) et par son circuit de déclenchement sur des contacts de commutation, le circuit de déclenchement comportant entre un enroulement secondaire (2, 3) du transformateur sommateur de courant (1) et l'enroulement de déclenchement (4) d'un dispositif de déclenchement (5) un circuit redresseur à pleine onde (6) avec prise centrale et un circuit RC (7) pour la formation d'une constante de temps de charge (R1 x C3), la tension de charge du circuit RC (7) étant limitée par un dispositif de limitation de tension (V5),
caractérisé par le fait qu'un autre circuit RC (8) est branché en parallèle avec le premier circuit RC (7) quant à la connexion de celui-ci à l'enroulement secondaire (2, 3) du transformateur sommateur de courant (1) et est dimensionné de telle sorte que la constante de temps de charge (R2 x C4) de l'autre circuit RC (8) est inférieure à celle du premier circuit RC (7), de telle sorte qu'un déclenchement pour un courant de fuite de petite amplitude de l'ordre de 5 fois le courant de fuite nominal n'a pas lieu.

2. Disjoncteur selon la revendication 1,
caractérisé par le fait que la résistance (R1) du premier circuit RC (7) vers le dispositif de limitation de tension (V5) est divisée en deux résistances (R4, R1') en série, une résistance (R4) dans le circuit enroulement secondaire - dispositif de limitation de tension étant dimensionnée de telle sorte que le débit par le dispositif de limitation de tension (V5) ou la chute de tension à celui-ci est réduite si bien qu'un déclenchement pour un courant de fuite de grande amplitude de l'ordre de 17.000 fois le courant de fuite nominal n'a pas lieu.

3. Disjoncteur selon la revendication 1 ou 2,
caractérisé par le fait qu'une diode Zener branchée dans le sens passant sert de dispositif de limitation de tension (V5).

4. Disjoncteur selon la revendication 1 ou 2,
caractérisé par le fait que le condensateur (C4) de l'autre circuit RC (8) est en liaison avec une résistance de décharge (R3).
